Europäisches Patentamt

European Patent Office

Office européen des brevets

(11) Veröffentlichungsnummer: **0 477 648 A1**

# EUROPÄISCHE PATENTANMELDUNG

(21) Anmeldenummer: **91115255.1**

(22) Anmeldetag: **10.09.91**

(51) Int. Cl.⁵: **G01N 29/00**, G01N 29/18

(30) Priorität: **28.09.90 DE 4030651**

(43) Veröffentlichungstag der Anmeldung:
**01.04.92 Patentblatt 92/14**

(84) Benannte Vertragsstaaten:
**BE DE ES FR GB IT NL SE**

(71) Anmelder: **BASF Aktiengesellschaft
Carl-Bosch-Strasse 38
W-6700 Ludwigshafen(DE)**

(72) Erfinder: **Fuchs, Harald, Dr.
Boehlweg 32
W-6719 Carlsberg(DE)**
Erfinder: **Schrepp, Wolfgang, Dr.
Sitzbuchweg 114
W-6900 Heidelberg(DE)**
Erfinder: **Rapp, Michael, Dr.
Watzmannstrasse 17
W-7032 Sindelfingen(DE)**
Erfinder: **Hunklinger, Siegfried, Prof. Dr.
Am Buechsenackerhang 68
W-6900 Heidelberg(DE)**
Erfinder: **Von Schicktus, Manfred, Dr.
Adolf Kolpingstrasse 4
W-6903 Neckargemuend(DE)**

(54) Oberflächenwellen-Gassensor.

(57) Die Erfindung betrifft einen hochempfindlichen Oberflächenwellen-Gassensor, bei dem durch die Wechselwirkung eines Oberflächenwellenfeldes mit einem zur Adsorption des zu bestimmenden Gases geeigneten Festkörperfilm die Frequenz eines eine Oberflächenwellenverzögerungsleitung enthaltenden Schwingkreises in Abhängigkeit von Gasart und Gaskonzentration verändert wird, wobei die für die Adsorption des Gases vorgesehene Verzögerungsleitung vollständig mit dem Festkörperfilm beschichtet ist und die Verzögerungleitungen so bemessen sind, daß die Oberflächenwellen-Wandlerlänge größer ist als die der Verzögerungsleitung.

EP 0 477 648 A1

Die Erfindung betrifft einen hochempfindlichen Oberflächenwellen-Gassensor, bei dem durch die Wechselwirkung eines Oberflächenwellenfeldes mit einem zur Adsorption des zu bestimmenden Gases geeigneten Festkörperfilm die Frequenz eines eine Oberflächenwellenverzögerungsleitung enthaltenden Schwingkreises in Abhängigkeit von Gasart und Gaskonzentration verändert wird.

Der Nachweis und die quantitative Bestimmung von gasförmigen Emissionen gewinnt zunehmend an Bedeutung. Um solche Messungen schnell, exakt und auch bei geringster Konzentration des zu bestimmenden Stoffes ohne umfangreichen apparativen Aufwand zu bewerkstelligen, werden in zunehmendem Maße sogenannte Oberflächenwellen-Gassensoren entwickelt. Hierzu werden auf einem piezoelektrischen Material Oberflächenwellen, sogenannte Rayleigh-Wellen, erzeugt. Diese Oberflächenwelle muß auf ihrem Weg zwischen Sender und Empfänger einen dünnen Film passieren, der in der Lage ist, das zu bestimmende Gas reversibel zu adsorbieren. Durch die daraus resultierende Massenänderung wird die Ausbreitungsgeschwindigkeit der Oberflächenwelle entlang des beschichteten Teils ihres Ausbreitungsweges verändert. Die dadurch geänderte Phasenlage der Oberflächenwelle erzeugt im Resonanzkreis eine dazu annähernd proportionale Änderung der Resonanzfrequenz, wodurch ein Maß für die Wechselwirkung mit dem zu bestimmenden Gas vorliegt. Die Massenempfindlichkeit eines Oberflächenwellen-Gassensors drückt sich in einer Änderung der Resonanzfrequenz aus, welche proportional dem Quadrat der Resonanzfrequenz und der Veränderung der Massenbelegung bezogen auf die adsorbierende Oberfläche ist (Wohltjen, Sensors and Actuators, Vol. 5, 307 - 324 (1984)). Die Empfindlichkeit eines Oberflächenwellen-Gassensors ist somit proportional zum Quadrat seiner Resonanzfrequenz. Von der Wirkungsweise des Films ist es nun abhängig, welches Gas detektiert wird bzw. inwieweit die Detektion spezifisch bezüglich eines bestimmten gasförmigen Stoffes erfolgt.

Eine erste Beschreibung eines Sensors auf der Basis eines Schwingkreises mit einer Oberflächenwellen-Verzögerungsleitung findet sich in der US-PS 4,312,228. Danach wird, ausgehend von dem bereits zuvor bekannten Effekt, mittels Oberflächenwellen beispielsweise die Dicke von im Vakuum aufgedampften Schichten zu bestimmen, das piezoelektrische Material, welches den Weg für die Oberflächenwelle darstellt, mit einer, selektiv für eine Substanz wirkenden Schicht belegt und dann die Eigenschaften der Oberflächenwelle bestimmt. Um auf dieser Grundlage einen Gassensor bereitzustellen, ist es notwendig, daß die die Verzögerungsleitung bedeckende Schicht entweder durch Physisorption oder Chemisorption selektiv mit dem zu bestimmenden Gas in Wechselwirkung tritt (Wohltjen, Sensors and Actuators, Vol. 5, 307 - 324 (1984)). Als geeignete Substanzen wurden hierfür Phthalocyanin-Komplexe mit verschiedenen Zentralatomen, wie Pb, Cu, Fe u. a. sowie metallfreie Komplexe mit Wasserstoff als zentralen Substituenten genannt, die sich zum Nachweis für $NO_2$, $Cl_2$, $NH_3$, $F_2$ und anderer Moleküle mit hoher Elektronenacceptoreigenschaft eignen.

Mit den bisher bekannten Gassensoren ergaben sich jedoch vielfach Probleme mit willkürlich auftretenden Modensprüngen, schlechter Driftstabilität der Resonanzfrequenz aufgrund eines starken Temperaturgangs der Oberflächenwellen-Schallgeschwindigkeit bei der üblichen Verwendung von Lithiumniobat als Substratmaterial. Dieser Temperaturgang wirkt sich trotz Kompensationsschaltung mittels Referenzbahn negativ auf die Frequenzstabilität aus. Auch durch die Verwendung kleinerer Frequenzen läßt sich die Empfindlichkeit nicht ausreichend steigern ohne nicht gleichzeitig bei gesteigerter Empfindlichkeit durch die Verwendung dickerer Absorptionsschichten längere Ansprechzeiten hinzunehmen. Zusätzlich zur reinen, schnellen Adsorption an der Oberfläche erlauben solche dickeren Filme die zusätzliche Absorption in tiefere Schichten, wobei zwar einerseits die Empfindlichkeit gesteigert, aber andererseits die Ansprechzeit, bedingt durch die langsamere Diffusion im Zusammenhang mit der Absorption, erhöht wird.

Aufgabe der vorliegenden Erfindung war es nun, einen Oberflächenwellen-Gassensor bereitzustellen, der die vorgenannten Nachteile nicht aufweist und sich insbesondere durch eine hohe Empfindlichkeit bei geringsten Gaskonzentrationen sowie eine kurze Ansprechzeit auszeichnet.

Es wurde nun gefunden, daß sich mit einem Gassensor, im wesentlichen bestehend aus einer die Frequenz eines Schwingkreises bestimmender Oberflächenwellen-Verzögerungsleitung, wobei sich auf der Verzögerungsleitung ein weniger als 0,1 μm dicker organischer, nichtleitender Festkörperfilm zur Adsorption des zu bestimmenden Gases befindet, die gestellte Aufgabe lösen läßt, wenn die Verzögerungsleitung vollständig mit dem Festkörperfilm beschichtet ist, die Verzögerungsleitung eine Resonanzfrequenz im Frequenzbereich zwischen 0,5 und 2 GHz aufweist und so bemessen ist, daß die Oberflächenwellen-Wandlerlänge größer ist als die Länge der Verzögerungsleitung und die Wandler so gestaltet sind, daß im Durchlaßspektrum der Verzögerungsleitung eine Modensprünge nichtzulassende Durchlaßkurve, entsprechend einer geringen Bandbreite, entsteht.

Vorzugsweise beträgt die Anzahl der Verzögerungsleitungen zwei. Bei einer Ausgestaltung des erfindungsgemäßen Gassensors mit mehr als zwei Verzögerungsleitungen lassen sich die weiteren Verzögerungsleitungen mit Festkörperfilmen beschichten, die entweder eine verschiedene Schichtstärke des adsorbierenden Materials zur Verbreiterung des Empfindlichkeitsbereichs oder aber unterschiedliche Festkörperfilme zur Bestimmung unterschiedlicher Gase aufweisen.

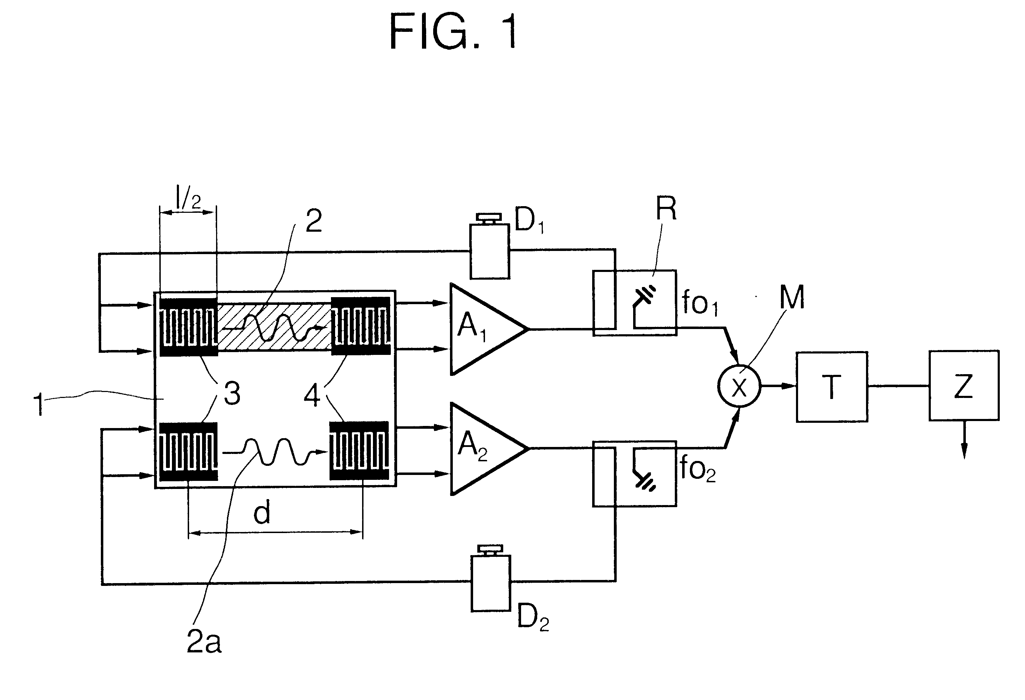

Eine schematische Darstellung des erfindungsgemäßen Gassensor ist in Figur 1 wiedergegeben. Auf einem piezoelektrischen Substrat 1 sind zwei getrennte Verzögerungsleitungen 2 und 2a aufgebracht, wobei eine von ihnen mit dem das zu bestimmende Gas adsorbierenden Festkörperfilm beschichtet ist. Die die Verzögerungsleitungen begrenzenden Wandler (3 und 4), Sender und Empfänger für die Oberflächenwellen, bestehen aus auf das piezoelektrische Substrat aufgedampften, sogenannten Fingerpaaren. Beispielhaft sei der Wandler aus etwa 1900 Fingerpaaren zur Erzeugung einer Oberflächenwelle auf dem Substrat mit einer Wellenlänge von 5,25 $\mu$m aufgebaut. Jede dieser Oberflächenwelleneinheiten ist Teil eines HF-Schwingkreises, bestehend aus einem Verstärker $A_1$ $(A_2)$, einem in engen Stufen von z. B. 0,1 dB schaltbaren Dämpfungsglied $D_1$ $(D_2)$ zur Abschwächung des Signals auf eine Schleifenverstärkung des gesamten Resonanzkreises möglichst nahe 1. Mit Hilfe eines Richtkopplers $R_1$ $(R_2)$ werden aus den im Resonanzkreis umlaufenden Signal ein gewisser Anteil, beispielsweise -20 dB, berührungsfrei ausgekoppelt. Dies bewirkt, daß Störungen von der Auswertungsseite der Elektronik ebenfalls nur mit der entsprechenden Abschwächung auf den Resonanzkreis Einfluß nehmen können, so daß die Frequenzstabilität dadurch weiter erhöht ist. Anschließend wird das Signal mit dem des Parallelschwingkreises zur Temperaturkompensation mit Hilfe eines HF-Mischers M gemischt und daraufhin mittels eines Tiefpasses T die Differenzfrequenz $\Delta$f aus dem Mischsignal herausgefiltert. Dieses Signal wird mit einem Frequenzzähler Z gezählt und damit die Differenzfrequenz bestimmt und ausgewertet.

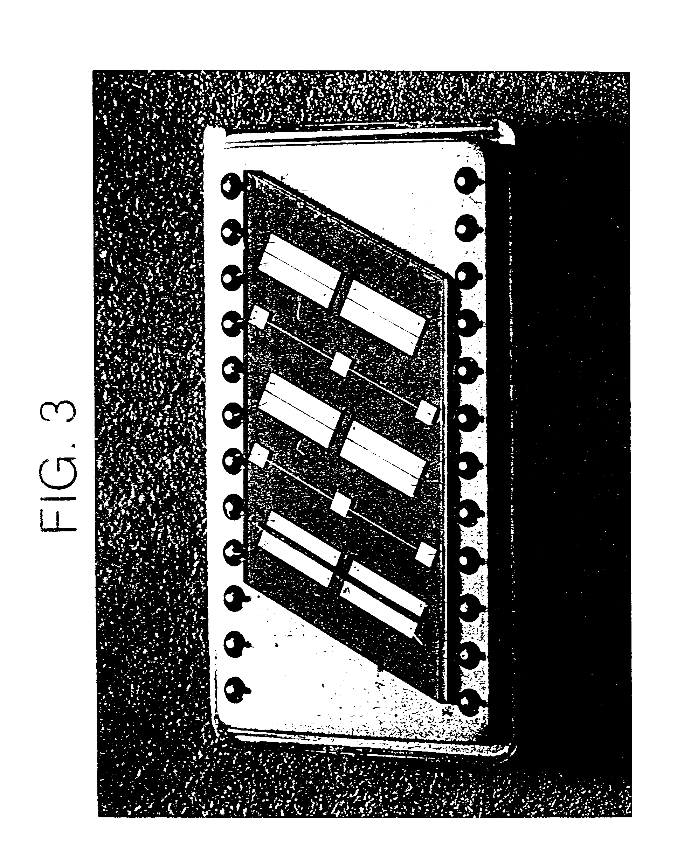

Zur Durchführung einer Messung mit dem erfindungsgemäßen Gassensor muß für eine hohe Temperaturstabilität der Meßeinheit gesorgt werden. Hierzu dienen ebenfalls auf das Substrat aufgedampfte Aluminiumstreifen, die als thermische Widerstände wirken und die Temperatur direkt an der Oberfläche des Substrats messen. Dadurch wird eine exakte Temperaturregelung sowohl des Substrats als auch des Festkörperfilms ermöglicht. Einen solchen Gassensor zeigt das Bild (Figur 3).

Bei der Ausgestaltung des Oberflächenwellen-Gassensors ist es zweckmäßig den Winkel zwischen der Ausbreitungsrichtung der Oberflächenwelle und der Schnittkante des Substrats von 90° abweichend, vorteilhaft bei 115°, zu wählen, so daß die nach hinten aus dem Wandler laufenden Oberflächenwellen nicht wieder zurück in den Wandler reflektiert werden können. Auf diese Weise werden direkt benachbarte, störende Transmissionslinien im Oberflächenwellen-Spektrum der Verzögerungsleitung vermieden. Damit entfällt das Anbringen eines üblicherweise an der Kristallschnittkante des Substrats befindlichen "akustischen Sumpfes". Als Substratmaterial eignet sich insbesondere Quarz. Dieses Material weist einen sehr geringen Temperaturgang der Oberflächenwellen-Schallgeschwindigkeit auf und außerdem kann der Kristallschnitt derart gewählt werden, daß bei optimaler Arbeitstemperatur des Festkörperadsorptionsfilms der Kompensationspunkt, d. h. die maximale Schallgeschwindigkeit, vorliegt und somit bei dieser Temperatur einen Temperaturgang von Null aufweist.

Die vollständige Belegung der beiden Verzögerungsleitungen mit einem sensitiven Festkörperfilm in der geforderten ultradünnen Schichtdicke läßt sich insbesondere mit der Langmuir-Blodgett-Technik als Mono- oder Multischicht erreichen. Ebenfalls geeignet ist die Herstellung dieser Schichten durch Aufdampfen oder Sublimation im Vakuum. Wird die gasselektive Schicht durch kovalente bzw. ionische Bindung an die Haftschicht des Trägers gekoppelt, führt dies zu einer hohen Packungsdichte der Rezeptoren und damit zu einer hohen Empfindlichkeit des Gassensors.

Ein solcher Gassensor zeichnet sich erfindungsgemäß nun dadurch aus, daß die gesamte Verzögerungsleitung und nicht nur die Fläche zwischen den Wandlern mit dem für die Adsorption des zu bestimmenden Gas geeigneten Festkörperfilm beschichtet ist. Ein weiteres wesentliches Merkmal des erfindungsgemäßen Gassensors ist die Bemessung der Länge der Verzögerungsleitung. Wird eine Verzögerungsleitung innerhalb einer Resonanzschaltung betrieben, so ist die Anzahl der darauf befindlichen Phasendurchgänge beliebig, sofern die zugehörige Wellenlänge mit $\nu_0$ eine Resonanzfrequenz ergibt, welche innerhalb der Bandbreite liegt. Verursacht durch kleine, zufällige Störungen kann sich so die Resonanzfrequenz sprunghaft ändern. Solche Frequenzsprünge nennt man Modensprünge, welche sich naturgemäß sehr störend auswirken. Diese Störung läßt sich nun dadurch vermeiden, daß entlang einer Oberflächenwellenbahn die Länge der Verzögerungsleitung d, das ist der Abstand zwischen den Transducermitten, kleiner gewählt wird als die Länge der Transducer l. Die Länge eines Transducers ist hierbei 1/2 • l (Figur 1). Somit sind dann keine störenden Modensprünge mehr möglich, wenn deren Frequenzabstand größer ist als die Resonanzbreite des betreffenden Transducers, d.h. d kleiner ist als l.

Ein derart gestalteter Gassensor eröffnet die Möglichkeit, ein definiertes Ausgangssignal zu liefern ohne den störenden Einfluß von eventuellen Modensprüngen. Dies führt zu einem streng reproduzierbaren Signalverlauf während der Sorptionsvorgänge. Außerdem wird durch die erfindungsgemäße Gestaltung des Gassensors die Notwendigkeit, eine sogenannte "Automatische Verstärkungskontrolle (AGC) wie u. a. bei Venema et al., Sensors and Actuators, 10 (1986), 47 - 64 beschrieben, einzusetzen, vermieden. Mit einer solchen AGC soll die während der Sorption eines Gases variierende Dämpfung der gesamten Verzögerungsleitung unterbunden werden. Eine derartige AGC hat jedoch neben dem apparativen Aufwand noch den Nachteil, die Phasenlage im elektrischen Kreis in Abhängigkeit zur elektrisch steuerbaren Verstärkung zu verändern. Die mit der AGC mögliche schnelle, automatische Regelung der Schleifenverstärkung des Schwingkreises nahe 1 ist beim Aufbau des erfindungsgemäßen Gassensors nicht notwendig, da die durch die Übersteuerung der Verstärker erzeugten Nebenfrequenzen durch die starke Filtercharakteristik der speziellen Verzögerungsleitungen genügend stark abgedämpft sind.

Außerdem erübrigt sich eine AGC auch noch aus folgendem Grund. So tritt mit dem erfindungsgemäßen Sensor die ansonsten mit der AGC nach dem Stand der Technik unterbunden Variation der Dämpfung im Verlauf der Adsorption aufgrund der Tatsache nicht auf, daß sich im Falle der nur auf die Wegstrecke zwischen den Wandlern beschränkten Beschichtung die schwingende Mode durch die entstandene Phasenverschiebung bei der Adsorption durch das stehende Durchlaßspektrum schiebt. Bei vollständiger Beschichtung jedoch verschiebt sich im Falle der Adsorption die schwingende Mode gleichermaßen wie das gesamte Durchlaßspektrum, so daß aufgrund fehlender Relativbewegung im Frequenzraum keine zusätzliche Dämpfungsvariation erzeugt wird. Aus demselben Grund wird mit dem erfindungsgemäßen Gassensor die Wahl eines möglichst scharfen Durchlaßspektrums hinsichtlich einer besseren Schwingungsstabilität erst ermöglicht.

Mit dem erfindungsgemäßen Gassensor lassen sich aufgrund seiner hohen Empfindlichkeit ultradünne, mit Hilfe der Sublimationstechnik (UHV) beschichteten Filme im Schichtdickenbereich weniger Moleküldurchmesser und außerdem Schichten, die mit der Langmuir-Blodgett-Technik hergestellt werden, optimal nutzen. Mit diesen ultradünnen Filmen sind im Hinblick auf die Anwendung in der Gassensorik wegen der Beschränkung auf die nur durch die Wechselwirkung zwischen Film und Prüfgas entstehenden Oberflächeneffekte geringste Ansprechzeiten zu realisieren. Eine Beeinflussung durch die langsame Diffusion in tiefere Filmlagen kann hierbei nicht stattfinden und die Ansprechzeit auf diese Weise verlängern. Obwohl die Verwendung von leitenden Sorptionsfilmen wegen der Bedeckung der gesamten Verzögerungsleitung mit dem Festkörperfilm nicht möglich ist, da die Wandler dabei kurzgeschlossen würden, so lassen sich sehr wohl organische Halbleiter, wie z. B. die Phthalocyanin-Komplexe, als ultradünne Filme für den erfindungsgemäßen Gassensor heranziehen, da sie bei den genutzten Schichtdicken einen genügend großen Widerstand aufweisen.

Beispielhaft sei der Nachweis von $NO_2$ mit Hilfe des erfindungsgemäßen Gassensors beschrieben. Dazu wird die Verzögerungsleitung mit Hilfe der Langmuir-Blodgett-Technik mit einer bzw. vier Monolagen eines Eisen-Phthalocyanin-Komplexes (Pc-Komplex) der Formel $(C_5H_{11}0)_8 FePc$ beschichtet. Bei einer Temperatur von $40\,^\circ C$ ergibt sich eine Empfindlichkeit des Sensors mit der 4-Monolagen-Schicht zu 5700 Hz/ppm und bei der 1-Monolagen-Schicht zu 1900 Hz/ppm. Daraus resultiert für die dickere Schicht bei einer Auflösung des Sensors von etwa 5 Hz eine $NO_2$-Nachweisgrenze von nur 1 ppb.

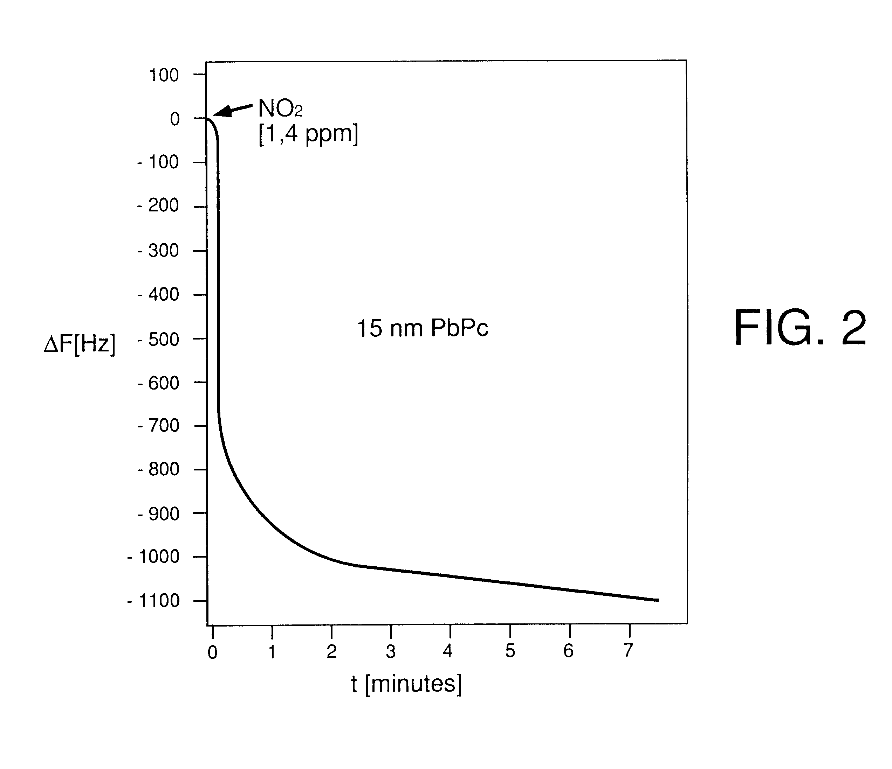

Sehr gute Ergebnisse lassen sich auch mit UHV-sublimierten PbPc-Schichten erreichen. Den Signalverlauf zeigt Figur 2. Die Schicht wurde mit einer Knudsen-Zelle im UHV bei $380\,^\circ C$ aufsublimiert. Die resultierende Schichtdicke betrug 15 nm. Die Meßtemperatur betrug $120\,^\circ C$ und die angelegte $NO_2$-Konzentration 1,4 ppm (in Stickstoff). Innerhalb von 5 Minuten entstand mit dem erfindungsgemäßen Gassensor eine Frequenzänderung ($\Delta f$) von 1100 Hz. Somit war die Empfindlichkeit 800 Hz/ppm. Weitere Messungen zeigten, daß der Sensor linear auf die angelegte $NO_2$-Konzentration reagierte. Daraus folgert eine Auflösungsgrenze von 6 ppb $NO_2$ in Stickstoff.

**Patentansprüche**

1. Gassensor, im wesentlichen bestehend aus einer die Frequenz eines Schwingkreises bestimmenden Oberflächenwellen-Verzögerungsleitung, wobei sich auf der Verzögerungsleitung ein weniger als 0,1 $\mu$m dicker organischer, nichtleitender Festkörperfilm zur Adsorption des zu bestimmenden Gases befindet, dadurch gekennzeichnet, daß die Verzögerungsleitung vollständig mit dem Festkörperfilm beschichtet ist, die Verzögerungsleitung eine Resonanzfrequenz im Frequenzbereich zwischen 0,5 und 2 GHz aufweist und so bemessen ist, daß die Oberflächenwellen-Wandlerlänge größer ist als die Länge der Verzögerungsleitung und die Wandler so gestaltet sind, daß im Durchlaßspektrum der Verzögerungsleitung eine Modensprünge nichtzulassende Durchlaßkurve, entsprechend einer geringen

Bandbreite, entsteht.

# FIG. 1

$l/2$

$D_1$

R

2

$A_1$

$fo_1$

M

1

3    4

$A_2$

$fo_2$

X   T   Z

2a

d

$D_2$

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | THIN SOLID FILMS vol. 160, no. 1 + , June 1988, LAUSANE pages 445 - 452; B.HOLCROFT, G.G.ROBERTS: 'Surface acoustic wave sensors incorporating Langmuir-Blodgett films' <br> * the whole document * * <br> – – – | 1 | G 01 N 29/00 <br> G 01 N 29/18 |
| A | IEEE TRANSACTIONS ON ULTRASONICS, FERROELEC-TRICSAND FREQUENCY CONTROL vol. 34, no. 2, March 1987, NEW YORK pages 172 - 178; H.WOHLTJEN ET AL.: 'Trace chemical vapor detection using saw delay line oscilla-tors.' <br> * the whole document * * <br> – – – | 1 | |
| A | IEEE TRANSACTIONS ON ULTRASONICS FERROELEC-TRICS AND FREQUENCY CONTROL. vol. 34, no. 2, March 1987, NEW YORK A.VENEMA ET AL.: 'NO2 gas-concentration measurement with a saw chemosensor' <br> * the whole document * * <br> – – – – – | 1 | |

**RECHERCHIERTE SACHGEBIETE (Int. Cl.5)**

G 01 N

Der vorliegende Recherchenbericht wurde für alle Patentansprüche erstellt

| Recherchenort | Abschlußdatum der Recherche | Prüfer |
|---|---|---|
| Den Haag | 13 Dezember 91 | KOUZELIS D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument